# EUROPEAN PATENT SPECIFICATION

(11) **EP 3 136 648 B1**
(45) Date of publication and mention of the grant of the patent: **02.09.2020**
(21) Application number: 16178431.9
(22) Date of filing: 07.07.2016
(51) Int. Cl.: H04W 12/00, H04L 9/32, H04L 29/06, H04L 29/08, H04W 12/06, H04W 12/08, H04W 8/00

(54) **METHOD AND DEVICE FOR DETERMINING CONTROL AUTHORITY ON USER DEVICE**
VERFAHREN UND VORRICHTUNG ZUR BESTIMMUNG DER KONTROLLAUTORITÄT AUF EINER BENUTZERVORRICHTUNG
PROCÉDÉ ET DISPOSITIF DE DÉTERMINATION D'AUTORITÉ DE CONTRÔLE SUR UN DISPOSITIF UTILISATEUR

(30) Priority: 28.08.2015 CN 201510542826
(43) Date of publication of application: 01.03.2017
(73) Proprietor: Xiaomi Inc., Beijing 100085 (CN)
(72) Inventor: LI, Feiyun, Beijing 100085 (CN); YANG, Yun, Beijing 100085 (CN); HOU, Enxing, Beijing 100085 (CN)
(74) Representative: Hughes, Andrea Michelle

(56) References cited:
- US-A1- 2006 161 639
- US-A1- 2009 006 858
- US-A1- 2014 187 190
- US-A1- 2015 089 624
- US-A1- 2015 227 749
- US-B1- 9 009 805

## Description

### FIELD

The present disclosure relates to the network technology field, and more particularly to a method and a device for determining a control authority on a user device, and a terminal device.

### BACKGROUND

A camera and an infrared monitoring device are user devices closely associated with user privacy and property safety, therefore the safety of the user devices in the course of using is very important for a user. In the related art, when the user needs to control a user device via a terminal device, the terminal device needs to send a control instruction to a server; after user identity passes authentication in the server, the server sends the control instruction to the user device. If the terminal device and the user device are within a same local area network, the control instruction is still forwarded to the user device through the server, which increases a time cost in transmitting the control instruction. Data capture devices for obtaining data from the scene of an incident are taught in US 2014/0187190.

### SUMMARY

In order to solve problems in the related art, the present disclosure provides a method and a device for determining a control authority on a user device as well as a terminal device, which reduces the time cost in transmitting the control instruction.

According to embodiments of a first aspect of the present disclosure, a method for determining a control authority on a user device is provided as defined by claim 1.

The method includes:
sending a control instruction for controlling the user device to the server, if the device identifier of the user device is not found in the process of scanning for local devices and the user needs to remotely control the user device, wherein the control instruction carries identity authentication information of the user; and
controlling the user device according to the control instruction after the identity authentication information passes authentication in the server.

If the user needs to remotely control the user device, the identity authentication information is carried in the control instruction, and the terminal device has the authority of accessing and controlling the user device after the identity authentication information passes authentication in the server, so as to ensure security in the process that the terminal device remotely controls the user device.

The method further includes:
determining whether the first token is cached before sending the request message;
obtaining the local control authority of the user on the user device according to the first token cached, if the first token is cached; and
sending the request message for requesting the first token of the user device to the server, if the first token is not cached.

When the user wants to perform a local control on the user device, the local control authority of the user on the user device may be obtained directly according to the first token cached if the first token is cached, such that a response speed of the user device may be increased; if the first token is not cached, the request message for requesting the first token of the user device is sent to the server, and the terminal device has the authority to access and control the user device after the identity authentication information passes authentication in the server, so as to ensure security in the process that the terminal device remotely controls the user device.

In an embodiment, if the first token is a token reset by the user device, the first token may be generated by a hash algorithm according to an initial token of the user device, a random string and a MAC (Media Access Control) address of the user device, in which the initial token is randomly assigned when the user device leaves a factory.

The first token is generated by the hash algorithm according to the initial token of the user device, the random string and the MAC address of the user device, which ensures the first token to be unique, such that the first token is distinguished from tokens of other user devices, and a control error may be avoided by preventing the terminal device from controlling different user devices using a same token, thus enabling the terminal device to perform a more targeted control on the user device.

In an embodiment, the random string may be generated by the user device when resetting a token and may have a predetermined length.

The random string is generated by the user device when resetting a token, such that it ensures that the random string is associated with a current time, thus ensuring the uniqueness of the first token.

According to embodiments of a second aspect of the present disclosure, a terminal for determining a control authority on a user device is provided as defined by claim 4.

The terminal includes:
a second sending module, configured to send a control instruction for controlling the user device to the server, if the device identifier of the user device is not found in the process of scanning for local devices and the user needs to remotely control the user device, in which the control instruction carries identity authentication information of the user; and
a control module, configured to control the user device according to the control instruction after the identity authentication information passes authentication in the server.

The terminal further includes:
a second determining module, configured to determine whether the first token is cached before the first sending module sends the request message;
in which, if the second determining module determines that the first token is cached, the first determining module obtains the local control authority of the user on the user device according to the first token cached; and
in which, if the first token is not cached, the first sending module sends the request message for requesting the first token of the user device to the server.

In an embodiment, if the first token is a token reset by the user device, the first token is generated by a hash algorithm according to an initial token of the user device, a random string and a Media Access Control address of the user device, in which the initial token is randomly assigned when the user device leaves a factory.

In an embodiment, the random string may be randomly generated by the user device when resetting a token and may have a predetermined length.

According to embodiments of a third aspect of the present disclosure, a terminal device for determining a control authority on a user device is provided as defined by claim 7.

The technical solutions provided in the present disclosure may include the following beneficial effects. If the device identifier of the user device is found in the process of scanning for the local devices, the terminal device determines the local control authority of the user on the user device according to the first token returned by the server after the terminal sends the request message for requesting the first token to the server and the identity authentication information carried in the request message passes authentication in the server, such that from then on, the terminal device does not need to send the control instruction to the server for forwarding the control instruction to user device when the terminal device needs to perform the instruction control on the user device, thus reducing the time cost in transmitting the control instruction. In addition, since the first token is sent to the terminal device by the server after the identity authentication information passes authentication in the server, it ensures that the terminal device has a legal control authority on the user device, thus ensuring the safety of the user device in the process of controlling.

It should be understood that, the above general description and following detail description are exemplary and explanatory, and shall not be construed to limit the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart of a method for determining a control authority on a user device according to an example embodiment.
Fig. 1B is a schematic diagram of a scene in which a method for determining a control authority on a user device according to an example embodiment is applied.
Fig. 1C is a schematic diagram of an interface for controlling a user device according to a first example.
Fig. 2 is a flow chart of a method for determining a control authority on a user device according to a first example.
Fig. 3 is a flow chart of a method for determining a control authority on a user device according to a second example.
Fig. 4 is a block diagram of a device for determining a control authority on a user device according to an example embodiment.
Fig. 5 is a block diagram of another device for determining a control authority on a user device according to an example embodiment.
Fig. 6 is a schematic diagram of a device for determining a control authority on a user device according to an example embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

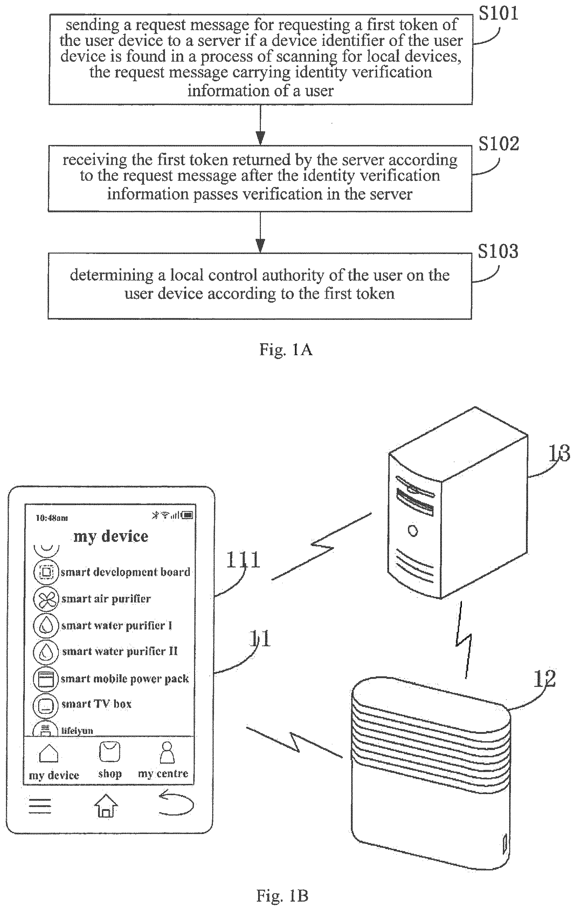

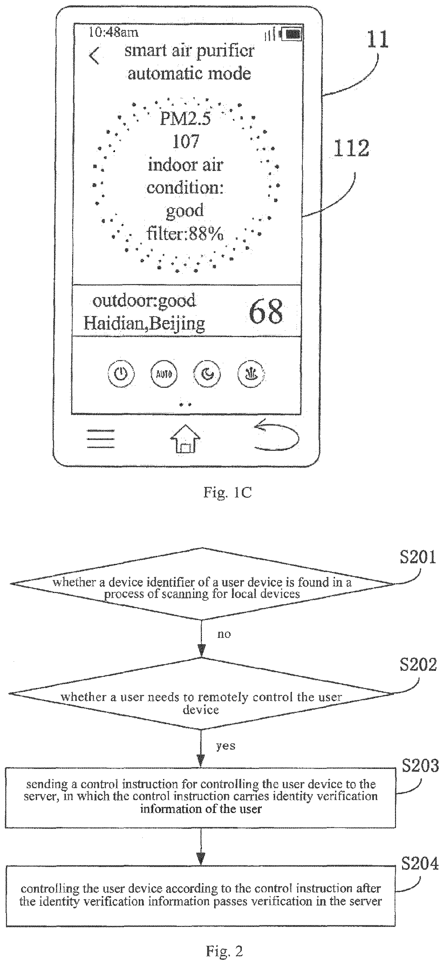

Fig. 1A is a flow chart of a method for determining a control authority on a user device according to an example embodiment; Fig. 1B is a schematic diagram of a scene in which a method for determining a control authority on a user device according to an example embodiment is applied; and Fig. 1C is a schematic diagram of an interface for controlling a user device according to a first example. The method for determining the control authority on the user device may be applied on a terminal device (e.g. a smart phone, a tablet PC, and a desktop computer), and may also be realized by installing an application (app) or software on the terminal device. As shown in Fig. 1A, the method for determining the control authority on the user device includes steps S101-S103.

In step S101, if a device identifier of a user device is found in a process of scanning for local devices, a request message for requesting a first token of the user device is sent to a server, wherein the request message carries identity authentication information of a user.

In an embodiment, a multicast Domain Name System (mDNS) may be used to determine whether there is a user device within a local area network. In an embodiment, the user device may be a smart air conditioner, a smart air purifier, a smart water purifier, a smart TV box and other smart home devices, and the terminal device may control the user device via the local area network or an internet. In an embodiment, different from the device identifier of the user device, the first token is a private identifier of the user device, and the first token can only be obtained by the terminal device having the control authority. In an embodiment, the first token may be a random string assigned when the user device leaves a factory and indicating a unique number of the user device; in another embodiment, the first token may be generated by a hash algorithm according to an initial token of the user device, a random string and a Media Access Control (MAC) address of the user device, the hash algorithm may be MD5 etc., and shall not be construed to limit the present disclosure.

In step S102, after the identity authentication information passes authentication in the server, the first token returned by the server according to the request message is received.

In an embodiment, the identity authentication information may include a user account name and an account password, and the server may determine whether there is a need to return the first token to the terminal device according to the authority of the user account name recorded on the server.

In step S103, a local control authority of the user on the user device is determined according to the first token.

In an embodiment, the local control authority may be determined according to a type of the user device, for example, if the user device is the smart air purifier, a specific control authority may be controlling a switch of the smart air purifier, and regulating a working mode (e.g. an automatic mode, a sleep mode, and a high-speed mode) of the smart air purifier; for another example, if the user device is the smart TV box, a specific control authority may be controlling a switch of the smart TV box, and regulating a channel and a volume of the smart TV box.

As shown in Fig. 1B, as an example scene, after opening a smart home app on the terminal device 11, a process of scanning for local devices is started on the smart home app, and user devices such as a smart development board, a smart air purifier, a smart water purifier I, a smart water purifier II, a smart mobile power source, and a smart TV box are found, as shown in Fig. 1B. If the user chooses to control the smart air purifier 12 on a user interface 111 of the smart home app, a terminal device 11 needs to detect whether the first token of the smart air purifier 12 is cached, if no, the terminal device 11 needs to send a request message for obtaining the first token of the smart air purifier 12 from a server 13, and the server 13 needs to analyze the request message of the terminal device 11 and determine whether the identity authentication information carried in the request message is legal. After the identity authentication information passes authentication, the server 13 returns the first token to the terminal device 11, and the terminal device 11 determines the local control authority on the smart air purifier 12 according to the first token. In addition, the server 13 may generate the first token by a hash algorithm according to an initial token of the smart air purifier 12, a random string and the MAC address of the smart air purifier 12, and store the first token.

As shown in Fig. 1C, after the terminal device 11 has the local control authority on the smart air purifier 12, the terminal device 11 may control the smart air purifier 12 via the user interface 112 associated with the smart air purifier 12 of the smart home app, for example, the smart air purifier 12 may be regulated to the automatic mode.

In the present embodiment, if the device identifier of the user device is found in the process of scanning for the local devices, the terminal device determines the local control authority of the user on the user device according to the first token returned by the server after the terminal sends the request message for requesting the first token to the server and the identity authentication information carried in the request message passes authentication in the server, such that from then on, the terminal device does not need to send the control instruction to the server for forwarding the control instruction to user device when the terminal device needs to perform the instruction control on the user device, thus reducing the time cost in transmitting the control instruction. In addition, since the first token is sent to the terminal device by the server after the identity authentication information passes authentication in the server, it ensures that the terminal device has a legal control authority on the user device, thus ensuring the safety of the user device in the process of controlling.

In an embodiment, the method may further include:
sending a control instruction for controlling the user device to the server, if the device identifier of the user device is not found in the process of scanning for local devices and the user needs to remotely control the user device, wherein the control instruction carries identity authentication information of the user; and
controlling the user device according to the control instruction after the identity authentication information passes authentication in the server.

In an embodiment, the method may further include:
determining whether the first token is cached before sending the request message;
obtaining the local control authority of the user on the user device according to the first token cached, if the first token is cached; and
sending the request message for requesting the first token of the user device to the server, if the first token is not cached.

In an embodiment, if the first token is a token reset by the user device, the first token is generated by a hash algorithm according to an initial token of the user device, a random string and a MAC address of the user device, in which the initial token is randomly assigned when the user device leaves a factory.

In an embodiment, the random string may be generated by the user device when resetting a token and may have a predetermined length.

Referring to embodiments as follows, a process of determining the control authority on the user device is provided.

In conclusion, with the method provided in the present disclosure, when the terminal device needs to perform the instruction control on the user device afterwards, the terminal device does not need to send the control instruction to the server for forwarding the control instruction to the user device, thus reducing the time cost in transmitting the control instruction; in addition, it ensures that the terminal device has a legal control authority on the user device, and the safety of the user device in the process of controlling is ensured.

The technique solution provided by embodiments of the present disclosure is described in detail with specific embodiments as follows.

Fig. 2 is a flow chart of a method for determining a control authority on a user device according to a first example embodiment. In the present embodiment, the above method provided in embodiments of the present disclosure is used, and illustration is made by taking the terminal device tending to remotely control the user device as an example and with reference to Fig. 1B and Fig. 1C. As shown in Fig. 2, the method includes steps as follows.

In step S201, it is determined whether a device identifier of a user device is found in a process of scanning for local devices, if yes, a local control authority on the user device is determined according to above described embodiment, and if no, step S202 is executed.

In step S202, it is determined whether a user needs to remotely control the user device, if yes, step S203 is executed, and if no, the process ends.

In step S203, a control instruction for controlling the user device is sent to the server, in which the control instruction carries identity authentication information of the user.

In an embodiment, the identity authentication information of the user may be bound to respective user devices.

In step S204, after the identity authentication information passes authentication in the server, the user device is controlled according to the control instruction.

As shown in Fig. 1B, as an example scene, after opening a smart home app on the terminal device 11, a process of scanning for local devices is started on the smart home app, and user devices as shown in Fig. 1B are not found. If the user needs to remotely control a smart air purifier 12 on a user interface of the smart home app, the terminal device 11 needs to send the control instruction to a server 13, the server 13 needs to analyze the identity authentication information of the terminal device 11 from the control instruction, and after the identity authentication information passes authentication, the server 13 forwards the control instruction to the smart air purifier 12.

As shown in Fig. 1C, when the terminal device 11 needs to remotely control the smart air purifier 12, the terminal device 11 may remotely control the smart air purifier 12 via the user interface associated with the smart air purifier 12 of the smart home app, for example, the terminal device sends the control instruction indicating that there is a need to regulate the smart air purifier 12 to an automatic mode to the server 13, and after the identity authentication information in the control instruction passes authentication in the server 13, the server 13 forwards the control instruction to the smart air purifier 12, and then the smart air purifier 12 is regulated to the automatic mode according to the control instruction.

Based on the beneficial effects of the technical solutions in the above described embodiment, the present embodiment may have following beneficial effects. When there is a need to remotely control the user device, the identity authentication information is carried in the control instruction for controlling the user device, and the terminal device has the control authority to access and control the user device after the identity authentication information passes authentication in the server, so as to ensure safety in the process that the terminal device remotely controls the user device.

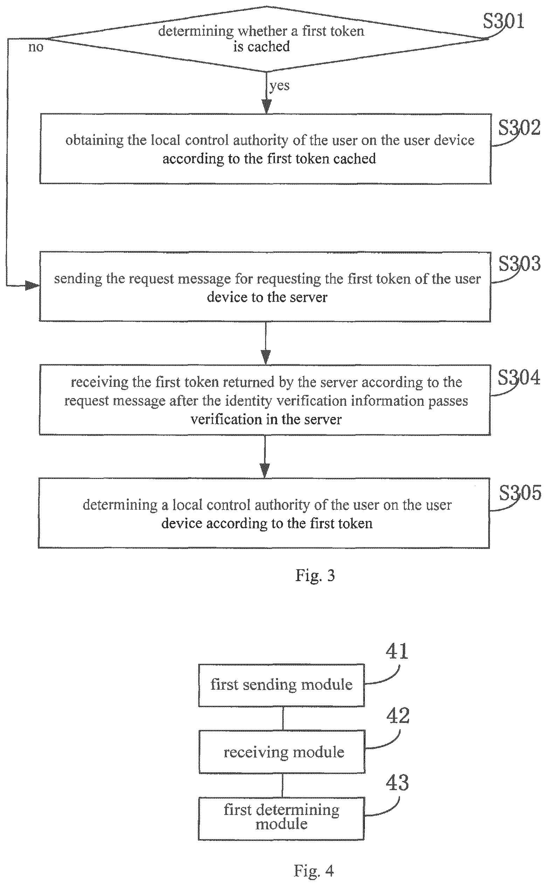

Fig. 3 is a flow chart of a method for determining a control authority on a user device according to a second example embodiment. In the present embodiment, the above method provided in embodiments of the present disclosure is used, and illustration is made by taking the terminal device determining whether to remotely control or locally control as an example and with reference to Fig. 1B and Fig. 1C. As shown in Fig. 3, the method includes steps as follows.

In step S301, if a device identifier of a user device is found in a process of scanning for local devices, it is determined whether a first token is cached, if yes, step S302 is executed, and if no, step S303 is executed.

In an embodiment, if a terminal device has already obtained a local control authority on the user device, the terminal device has already performed a local control on the user device according to the first token, and in this case, the terminal device may perform the local control on the user device directly. In another embodiment, if the terminal device has not performed a local control on the user device, the terminal device does not have the local control authority, and in this case, the terminal device needs to request the first token of the user device from the server, and determines the local control authority on the user device according to the first token.

In step S302, if the first token is cached, the local control authority on the user device is obtained according to the first token cached.

In step S303, if the first token is not cached, the request message for requesting the first token of the user device is sent to the server.

In step S304, the first token returned by the server according to the request message is received, after the identity authentication information passes authentication in the server.

In step S305, the local control authority on the user device is determined according to the first token.

Detailed description of step S303 to step S305 may refer to relative description of the embodiment shown in Fig. 1A, which will not be elaborated herein.

Based on the beneficial effects of the above described embodiment, the present embodiment may have the following beneficial effects. When the user wants to perform the local control on the user device, the local control authority on the user device may be obtained directly according to the first token if the first token is cached, such that a response speed of the user device may be increased; if the first token is not cached, the request message for requesting the first token of the user device is sent to the server, and the terminal device may have the authority to access and control the user device after the identity authentication information passes authentication in the server, so as to ensure safety of the user device in the process of remote control.

In an embodiment, if the first token is a token reset by the user device, the first token is generated by a hash algorithm according to an initial token of the user device, a random string and a MAC address of the user device, in which the initial token is randomly assigned when the user device leaves a factory.

In an embodiment, the random string is generated by the user device when resetting a token and has a predetermined length.

For example, the first token is a token reset by the user device, and illustration is made by taking the MD5 hash algorithm as an example:
the initial token (an old token) of the user device is 9750a980245ff26d49e1fc9774bddff9;
the random string generated by the user device when resetting the token is M7a89Ug19REp21Ad;
the MAC address of the user device is B0D59D293DC3; and
the first token (a new token) generated by the MD5 hash algorithm is 4c4c4c42d34eb95085ba279681d6506d.

With the first token generated according to the above process, the random string is generated randomly by the user device when resetting the token, such that the random string is ensured to be associated with the current time, thus ensuring the uniqueness of the first token. The first token is generated by a hash algorithm according to the initial token of the user device, the random string and the MAC address of the user device, which ensures the first token to be unique, such that the first token is distinguished from tokens of other user devices, and a control error may be avoided by preventing the terminal device from controlling different user devices using a same token, thus enabling the terminal device to perform a more targeted control on the user device.

Fig. 4 is a block diagram of a device for determining a control authority on a user device according to an example embodiment. As shown in Fig. 4, the device includes a first sending module 41, a receiving module 42 and a first determining module 43.

The first sending module 41 is configured to send a request message for requesting a first token of the user device to a server if a device identifier of the user device is found in a process of scanning for local devices, wherein the request message carries identity authentication information of a user.

The receiving module 42 is configured to receive the first token returned by the server according to the request message, after the identity authentication information sent by the first sending module 41 passes authentication in the server.

The first determining module 43 is configured to determine a local control authority of the user on the user device according to the first token received by the receiving module 42.

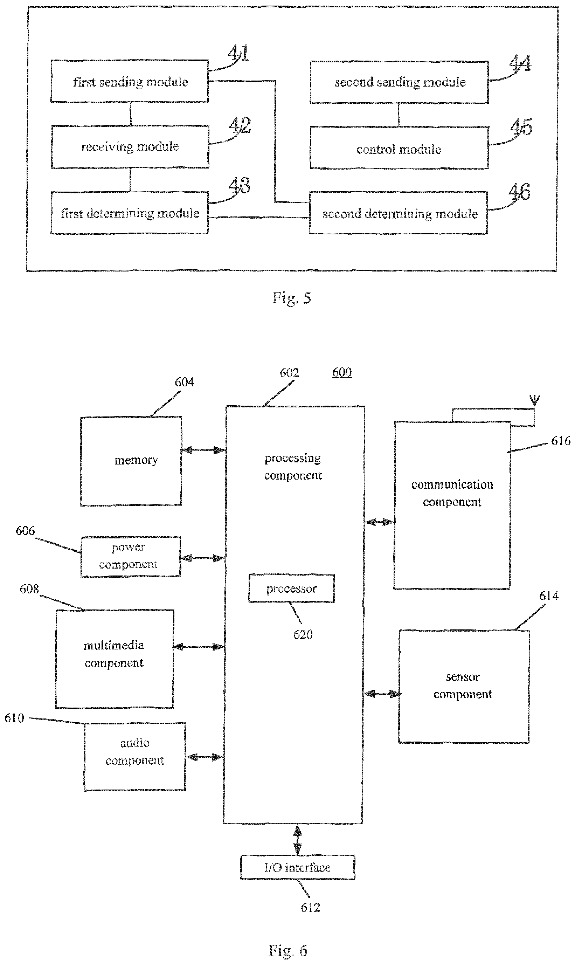

Fig. 5 is a block diagram of another device for determining a control authority on a user device according to an example embodiment. As shown in Fig. 5, based on the embodiment shown in Fig. 4, in an embodiment, the device further includes a second sending module 44 and a control module 45.

The second sending module 44 is configured to send a control instruction for controlling the user device to the server, if the device identifier of the user device is not found in the process of scanning for local devices and the user needs to remotely control the user device, wherein the control instruction carries identity authentication information of the user.

The control module 45 is configured to control the user device according to the control instruction after the identity authentication information sent by the second sending module 44 passes authentication in the server.

In an embodiment, the device may further include a second determining module 46.

The second determining module 46 is configured to determine whether the first token is cached.

If the second determining module 46 determines that the first token is cached, the first determining module 43 obtains the local control authority of the user on the user device according to the first token cached.

If the second determining module 46 determines that the first token is not cached, the first sending module 41 sends the request message for requesting the first token of the user device to the server.

In an embodiment, if the first token is a token reset by the user device, the first token is generated by a hash algorithm according to an initial token of the user device, a random string and a Media Access Control address of the user device, in which the initial token is randomly assigned when the user device leaves a factory.

In an embodiment, the random string is randomly generated by the user device when resetting a token and has a predetermined length.

With respect to the devices in the above embodiments, the specific operation modes of individual modules therein have been described in detail in the embodiments regarding the methods, which will not be elaborated herein.

Fig. 6 is a schematic diagram of a device for determining a control authority on a user device according to an example embodiment. For example, the device 600 may be a mobile phone, a computer, a digital broadcasting terminal, a messaging device, a game console, a tablet device, a fitness equipment, a Personal Digital Assistant PDA, etc.

Referring to Fig. 6, the device 600 may include the following one or more components: a processing component 602, a memory 604, a power component 606, a multimedia component 608, an audio component 610, an Input/Output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 608 includes a front camera and/or a rear camera. The front camera and the rear camera may receive external multimedia data while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the intelligent device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface for the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600 and relative positioning of components (e.g. the display and the keypad of the device 600). The sensor component 614 may also detect a change in position of the device 600 or of a component in the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate wired or wireless communication between the device 600 and other devices. The device 600 can access a wireless network based on a communication standard, such as WIFI, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 604 including instructions. The above instructions are executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for determining a local control authority of a user on a user device, the method is performed by a terminal, wherein the method comprising:
sending a request message for requesting a first token of the user device to a server if a device identifier of the user device is found in a process of scanning for local devices, wherein the request message carries identity authentication information of the user (S101);
receiving the first token returned by the server according to the request message after the identity authentication information passes authentication in the server (S102; S304); and
determining the local control authority of the user on the user device according to the first token (S103; S305), and controlling the user device according to the determined local control authority of the user on the user device; said method further comprising:
sending a control instruction for controlling the user device to the server, if the device identifier of the user device is not found in the process of scanning for local devices and the user needs to remotely control, via a user interface on the terminal, the user device (S201; S202; S203), wherein the control instruction carries the identity authentication information of the user; and
controlling the user device according to the control instruction after the identity authentication information passes authentication in the server (S204); and further comprising:
determining whether the first token is cached before sending the request message (S301);
obtaining the local control authority of the user on the user device according to the first token cached, if the first token is cached (S302); and
sending the request message for requesting the first token of the user device to the server, if the first token is not cached (S303).

2. The method according to claim 1, wherein, if the first token is a token reset by the user device, the first token is generated by a hash algorithm according to an initial token of the user device, a random string and a Media Access Control address of the user device, in which the initial token is randomly assigned when the user device leaves a factory.

3. The method according to claim 2, wherein, the random string is generated by the user device when resetting a token and has a predetermined length.

4. A terminal for determining a local control authority of a user on a user device, comprising:
a first sending module (41), configured to send a request message for requesting a first token of the user device to a server if a device identifier of the user device is found in a process of scanning for local devices, wherein the request message carries identity authentication information of a user;
a receiving module (42), configured to receive the first token returned by the server according to the request message after the identity authentication information passes authentication in the server; and
a first determining module (43), configured to determine the local control authority of the user on the user device according to the first token, and controlling the user device according to the determined local control authority of the user on the user device; said terminal further comprising:
a second sending module (44), configured to send a control instruction for controlling the user device to the server, if the device identifier of the user device is not found in the process of scanning for local devices and the user needs to remotely control, via a user interface on the terminal, the user device, wherein the control instruction carries the identity authentication information of the user; and
a control module (45), configured to control the user device via the terminal according to the control instruction after the identity authentication information passes authentication in the server; and further comprising:
a second determining module (46), configured to determine whether the first token is cached;
wherein, if the second determining module determines that the first token is cached, the first determining module is configured to obtain the local control authority of the user on the user device according to the first token cached; and
wherein, if the first token is not cached, the first sending module is configured to send the request message for requesting the first token of the user device to the server.

5. The terminal according to claim 4 wherein, if the first token is a token reset by the user device, the first token is generated by a hash algorithm according to an initial token of the user device, a random string and a Media Access Control address of the user device, in which the initial token is randomly assigned when the user device leaves a factory.

6. The terminal according to claim 5, wherein, the random string is randomly generated by the user device when resetting a token and has a predetermined length.

7. A terminal device for determining a local control authority of a user on a user device, comprising:a processor; and a memory, configured to store instructions executable by the processor; wherein, the processor is configured to:
send a request message for requesting a first token of the user device to a server if a device identifier of the user device is found in a process of scanning for local devices, in which the request message carries identity authentication information of the user;
receive the first token returned by the server according to the request message after the identity authentication information passes authentication in the server; and
determine the local control authority of the user on the user device according to the first token, and control the user device according to the determined local control authority of the user on the user device;
and wherein the processor is further configured to:
send a control instruction for controlling the user device to the server, if the device identifier of the user device is not found in the process of scanning for local devices and the user needs to remotely control, via a user interface on the terminal device, the user device (S201; S202; S203), wherein the control instruction carries the identity authentication information of the user; and
control the user device according to the control instruction after the identity authentication information passes authentication in the server (S204); and
wherein the processor is further configured to:
determine whether the first token is cached before sending the request message (S301);
obtain the local control authority of the user on the user device according to the first token cached, if the first token is cached (S302); and
send the request message for requesting the first token of the user device to the server, if the first token is not cached (S303).

8. The terminal device according to claim 7 wherein, if the first token is a token reset by the user device, the first token is generated by a hash algorithm according to an initial token of the user device, a random string and a Media Access Control address of the user device, in which the initial token is randomly assigned when the user device leaves a factory.

9. A program product having stored therein instructions that, when executed by one or more processors of an apparatus, causes the apparatus to perform the method of any of claims 1 to 3.

## Patentansprüche

1. Verfahren zum Bestimmen einer lokalen Steuerautorität eines Benutzers auf einer Benutzervorrichtung, wobei das Verfahren durch ein Endgerät durchgeführt wird, wobei das Verfahren umfasst:
Senden einer Anfragenachricht zum Anfragen eines ersten Tokens der Benutzervorrichtung an einen Server, wenn eine Vorrichtungskennung der Benutzervorrichtung in einem Prozess des Scannens nach lokalen Vorrichtungen gefunden wird, wobei die Anfragenachricht Identitätsauthentifizierungs-information des Benutzers trägt (S101);
Empfangen des ersten Tokens, das von dem Server nach der Anfragenachricht zurückgegeben wird, nachdem die Identitätsauthentifizierungsinformation eine Authentifizierung in dem Server durchlaufen hat (S102; S304); und
Bestimmen der lokalen Steuerautorität des Benutzers auf der Benutzervor-richtung nach dem ersten Token (S103; S305) und Steuern der Benutzervorrichtung nach der bestimmten lokalen Steuerautorität des Benutzers auf der Benutzervorrichtung; wobei das Verfahren weiter umfasst:
Senden einer Steueranweisung zum Steuern der Benutzervorrichtung an den Server, wenn die Vorrichtungskennung der Benutzervorrichtung in dem Prozess des Scannens nach lokalen Vorrichtungen nicht gefunden wird und der Benutzer die Benutzervorrichtung über eine Benutzerschnittstelle auf dem Endgerät fernsteuern muss (S201; S202; S203), wobei die Steueranweisung die Identitätsauthentifizierungs-information des Benutzers trägt; und
Steuern der Benutzervorrichtung nach der Steueranweisung nachdem die Identitätsauthentifizierungsinformation eine Authentifizierung in dem Server durchlaufen hat (S204); und weiter umfassend:
Bestimmen, ob das erste Token vor dem Senden der Anfragenachricht zwischengespeichert wurde (S301);
Erhalten der lokalen Steuerautorität des Benutzers auf der Benutzervorrichtung nach dem ersten zwischengespeicherten Token, wenn das erste Token zwischengespeichert ist (S302); und
Senden der Anfragenachricht zum Anfragen des ersten Tokens der Benutzervorrichtung an den Server, wenn das erste Token nicht zwischengespeichert wird (S303).

2. Verfahren nach Anspruch 1, wobei, wenn das erste Token ein durch die Benutzervorrichtung zurückgesetztes Token ist, das erste Token durch einen Hash-Algorithmus nach einem Anfangs-Token der Benutzervorrichtung, einer zufälligen Zeichenfolge und einer Medienzugriffssteuerungsadresse der Benutzervorrichtung erzeugt wird, wobei das Anfangs-Token zufällig zugewiesen wird, wenn die Benutzervorrichtung eine Fabrik verlässt.

3. Verfahren nach Anspruch 2, wobei die zufällige Zeichenfolge durch die Benutzervorrichtung beim Zurücksetzen eines Tokens erzeugt wird und eine vorbestimmte Länge aufweist.

4. Endgerät zum Bestimmen einer lokalen Steuerautorität eines Benutzers auf einer Benutzervorrichtung, umfassend:
ein erstes Sendemodul (41), das konfiguriert ist, um eine Anfragenachricht zum Anfragen eines ersten Tokens der Benutzervorrichtung an einen Server zu senden, wenn eine Vorrichtungskennung der Benutzervorrichtung in einem Prozess des Scannens nach lokalen Vorrichtungen gefunden wird, wobei die Anfragenachricht Identitätsauthentifizierungsinformation eines Benutzers trägt;
ein Empfangsmodul (42), das konfiguriert ist, um das erste Token, das von dem Server nach der Anfragenachricht zurückgegeben wird, zu empfangen, nachdem die Identitätsauthentifizierungsinformation eine Authentifizierung in dem Server durchlaufen hat; und
ein erstes Bestimmungsmodul (43), das konfiguriert ist, um die lokale Steuerautorität des Benutzers auf der Benutzervorrichtung nach dem ersten Token zu bestimmen und die Benutzervorrichtung nach der bestimmten lokalen Steuerautorität des Benutzers auf der Benutzervorrichtung zu steuern; wobei das Endgerät weiter umfasst:
ein zweites Sendemodul (44), das konfiguriert ist, um eine Steuerinformation zum Steuern der Benutzervorrichtung an den Server zu senden, wenn die Vorrichtungskennung der Benutzervorrichtung in dem Prozess des Scannens nach lokalen Vorrichtungen nicht gefunden wird und der Benutzer die Benutzervorrichtung über eine Benutzerschnittstelle auf dem Endgerät fernsteuern muss, wobei die Steueranweisung die Identitätsauthentifizierungsinformation des Benutzers trägt; und
ein Steuermodul (45), das konfiguriert ist, um die Benutzervorrichtung über das Endgerät nach der Steueranweisung zu steuern, nachdem die Identitätsauthentifizierungsinformation eine Authentifizierung in dem Server durchlaufen hat; und weiter umfassend:
ein zweites Bestimmungsmodul (46), das konfiguriert ist, um zu bestimmen, ob das erste Token zwischengespeichert ist;
wobei, wenn das zweite Bestimmungsmodul bestimmt, dass das erste Token zwischengespeichert ist, das erste Bestimmungsmodul konfiguriert ist, um die lokale Steuerautorität des Benutzers auf der Benutzervorrichtung nach dem ersten zwischengespeicherten Token zu erhalten; und
wobei, wenn das erste Token nicht zwischengespeichert ist, das erste Sendemodul konfiguriert ist, um die Anfragenachricht zum Anfragen des ersten Tokens der Benutzervorrichtung an den Server zu senden.

5. Endgerät nach Anspruch 4, wobei, wenn das erste Token ein durch die Benutzervorrichtung zurückgesetztes Token ist, das erste Token durch einen Hash-Algorithmus nach einem Anfangs-Token der Benutzervorrichtung, einer zufälligen Zeichenfolge und einer Medienzugriffssteuerungsadresse der Benutzervorrichtung erzeugt wird, wobei das Anfangs-Token zufällig zugewiesen wird, wenn die Benutzervorrichtung eine Fabrik verlässt.

6. Endgerät nach Anspruch 5, wobei die zufällige Zeichenfolge durch die Benutzervorrichtung beim Zurücksetzen eines Tokens zufällig erzeugt wird und eine vorbe-stimmte Länge aufweist.

7. Endgerätevorrichtung zum Bestimmen einer lokalen Steuerautorität eines Benutzers auf einer Benutzervorrichtung, umfassend:
einen Prozessor; und
einen Speicher, der konfiguriert ist, um durch den Prozessor ausführbare Anweisungen zu speichern;
wobei der Prozessor konfiguriert ist, um:
eine Anfragenachricht zum Anfragen eines ersten Tokens der Benutzervorrichtung an einen Server zu senden, wenn eine Vorrichtungskennung der Benutzervorrichtung in einem Prozess des Scannens nach lokalen Vorrichtungen gefunden wird, wobei die Anfragenachricht Identitätsauthentifizierungsinformation des Benutzers trägt;
das erste Token zu empfangen, das von dem Server nach der Anfragenachricht zurückgegeben wird, nachdem die Identitätsauthentifizierungsinformation eine Authentifizierung in dem Server durchlaufen hat; und
die lokale Steuerautorität des Benutzers auf der Benutzervorrichtung nach dem ersten Token zu bestimmen und die Benutzervorrichtung nach der bestimmten lokalen Steuerautorität des Benutzers auf der Benutzervorrichtung zu steuern; und
wobei der Prozessor weiter konfiguriert ist, um:
eine Steueranweisung zum Steuern der Benutzervorrichtung an den Server zu senden, wenn die Vorrichtungskennung der Benutzervorrichtung in dem Prozess des Scannens nach lokalen Vorrichtungen nicht gefunden wird und der Benutzer die Benutzervorrichtung über eine Benutzerschnittstelle auf der Endgerätevorrichtung fernsteuern muss (S201; S202; S203), wobei die Steueranweisung die Identitätsauthentifizierungsinformation des Benutzers trägt; und
die Benutzervorrichtung nach der Steueranweisung zu steuern, nachdem die Identitätsauthentifizierungsinformation eine Authentifizierung in dem Server durchlaufen hat (S204); und
wobei der Prozessor weiter konfiguriert ist, um:
zu bestimmen, ob das erste Token zwischengespeichert ist, bevor die Anfragenachricht gesendet wird (S301);
die lokale Steuerautorität des Benutzers auf der Benutzervorrichtung nach dem ersten zwischengespeicherten Token zu erhalten, wenn das erste Token zwischengespeichert ist (S302); und
die Anfragenachricht zum Anfragen des ersten Tokens der Benutzervorrichtung an den Server zu senden, wenn das erste Token nicht zwischengespeichert ist (S303).

8. Endgerätevorrichtung nach Anspruch 7, wobei, wenn das erste Token ein durch die Benutzervorrichtung zurückgesetztes Token ist, das erste Token durch einen Hash-Algorithmus nach einem Anfangs-Token der Benutzervorrichtung, einer zufälligen Zeichenfolge und einer Medienzugriffssteuerungsadresse der Benutzervorrichtung erzeugt wird, wobei das Anfangs-Token zufällig zugewiesen wird, wenn die Benutzervorrichtung eine Fabrik verlässt.

9. Programmprodukt mit darin gespeicherten Anweisungen, die bei Ausführung durch einen oder mehrere Prozessoren einer Vorrichtung bewirken, dass die Vorrichtung das Verfahren nach einem der Ansprüche 1 bis 3 durchführt.

## Revendications

1. Procédé pour déterminer une autorité de contrôle locale d'un utilisateur sur un dispositif utilisateur, le procédé étant mis en œuvre par un terminal, dans lequel le procédé comprend les étapes consistant à :
envoyer un message de demande pour demander un premier jeton du dispositif utilisateur à un serveur si un identifiant de dispositif du dispositif utilisateur est trouvé dans un processus de balayage de dispositifs locaux, dans lequel le message de demande porte des informations d'authentification d'identité de l'utilisateur (S101);
recevoir le premier jeton renvoyé par le serveur en fonction du message de demande après passage pour les informations d'authentification d'identité d'une authentification dans le serveur (S102 ; S304) ; et
déterminer l'autorité de contrôle locale de l'utilisateur sur le dispositif utilisateur en fonction du premier jeton (S103 ; S305), et contrôler le dispositif utilisateur en fonction de l'autorité de contrôle locale déterminée de l'utilisateur sur le dispositif utilisateur; ledit procédé comprenant en outre les étapes consistant à :
envoyer une instruction de contrôle pour contrôler le dispositif utilisateur au serveur, si l'identifiant de dispositif du dispositif utilisateur n'est pas trouvé dans le processus de balayage de dispositifs locaux et l'utilisateur a besoin de contrôler à distance, via une interface utilisateur sur le terminal, le dispositif utilisateur (S201 ; S202 ; S203), dans lequel l'instruction de contrôle porte les informations d'authentification d'identité de l'utilisateur ; et
contrôler le dispositif utilisateur en fonction de l'instruction de contrôle après passage pour les informations d'authentification d'identité d'une authentification dans le serveur (S204) ; et comprenant en outre :
déterminer si le premier jeton est mis en cache avant d'envoyer le message de demande (S301) ;
obtenir l'autorité de contrôle locale de l'utilisateur sur le dispositif utilisateur en fonction du premier jeton mis en cache, si le premier jeton est mis en cache (S302) ; et
envoyer le message de demande pour demander le premier jeton du dispositif utilisateur au serveur, si le premier jeton n'est pas mis en cache (S303).

2. Procédé selon la revendication 1, dans lequel, si le premier jeton est un jeton réinitialisé par le dispositif utilisateur, le premier jeton est généré par un algorithme de hachage en fonction d'un jeton initial du dispositif utilisateur, une chaîne aléatoire et une adresse de contrôle d'accès au support du dispositif utilisateur, où le jeton initial est attribué de manière aléatoire lorsque le dispositif utilisateur quitte une usine.

3. Procédé selon la revendication 2, dans lequel la chaîne aléatoire est générée par le dispositif utilisateur lors d'une réinitialisation d'un jeton et a une longueur prédéterminée.

4. Terminal pour déterminer une autorité de contrôle locale d'un utilisateur sur un dispositif utilisateur, comprenant :
un premier module d'envoi (41), configuré pour envoyer un message de demande pour demander un premier jeton du dispositif utilisateur à un serveur si un identifiant de dispositif du dispositif utilisateur est trouvé dans un processus de balayage de dispositifs locaux, dans lequel le message de demande porte des informations d'authentification d'identité d'un utilisateur ;
un module de réception (42), configuré pour recevoir le premier jeton renvoyé par le serveur en fonction du message de demande après passage pour les informations d'authentification d'identité d'une authentification dans le serveur ; et
un premier module de détermination (43), configuré pour déterminer l'autorité de contrôle locale de l'utilisateur sur le dispositif utilisateur en fonction du premier jeton, et contrôler le dispositif utilisateur en fonction de l'autorité de contrôle locale déterminée de l'utilisateur sur le dispositif utilisateur ; ledit terminal comprenant en outre :
un second module d'envoi (44), configuré pour envoyer une instruction de contrôle pour contrôler le dispositif utilisateur au serveur, si l'identifiant de dispositif du dispositif utilisateur n'est pas trouvé dans le processus de balayage de dispositifs locaux et l'utilisateur a besoin de contrôler à distance, via une interface utilisateur sur le terminal, le dispositif utilisateur, dans lequel l'instruction de contrôle porte les informations d'authentification d'identité de l'utilisateur ; et
un module de contrôle (45), configuré pour contrôler le dispositif utilisateur via le terminal en fonction de l'instruction de contrôle après passage pour les informations d'authentification d'identité d'une authentification dans le serveur ;
et comprenant en outre :
un second module de détermination (46), configuré pour déterminer si le premier jeton est mis en cache ;
dans lequel, si le second module de détermination détermine que le premier jeton est mis en cache, le premier module de détermination est configuré pour obtenir l'autorité de contrôle locale de l'utilisateur sur le dispositif utilisateur en fonction du premier jeton mis en cache ; et
dans lequel, si le premier jeton n'est pas mis en cache, le premier module d'envoi est configuré pour envoyer le message de demande pour demander le premier jeton du dispositif utilisateur au serveur.

5. Terminal selon la revendication 4, dans lequel, si le premier jeton est un jeton réinitialisé par le dispositif utilisateur, le premier jeton est généré par un algorithme de hachage en fonction d'un un jeton initial du dispositif utilisateur, une chaîne aléatoire et une adresse de contrôle d'accès au support du dispositif utilisateur, où le jeton initial est attribué de manière aléatoire lorsque le dispositif utilisateur quitte une usine.

6. Terminal selon la revendication 5, dans lequel la chaîne aléatoire est générée de manière aléatoire par le dispositif utilisateur lors d'une réinitialisation d'un jeton et a une longueur prédéterminée.

7. Dispositif terminal pour déterminer une autorité de contrôle locale d'un utilisateur sur un dispositif utilisateur, comprenant :
un processeur ; et
une mémoire, configurée pour stocker des instructions exécutables par le processeur;
dans lequel, le processeur est configuré pour :
envoyer un message de demande pour demander un premier jeton du dispositif utilisateur à un serveur si un identifiant de dispositif du dispositif utilisateur est trouvé dans un processus de balayage de dispositifs locaux, dans lequel le message de demande porte des informations d'authentification d'identité de l'utilisateur ;
recevoir le premier jeton renvoyé par le serveur en fonction du message de demande après passage pour les informations d'authentification d'identité d'une authentification dans le serveur ; et
déterminer l'autorité de contrôle locale de l'utilisateur sur le dispositif utilisateur en fonction du premier jeton, et contrôler le dispositif utilisateur en fonction de l'autorité de contrôle locale de l'utilisateur sur le dispositif utilisateur ;
et
dans lequel le processeur est en outre configuré pour :
envoyer une instruction de contrôle pour contrôler le dispositif utilisateur au serveur, si l'identifiant de dispositif du dispositif utilisateur n'est pas trouvé dans le processus de balayage de dispositifs locaux et l'utilisateur doit contrôler à distance, via une interface utilisateur sur le terminal, le terminal utilisateur (S201 ; S202 ; S203), dans lequel l'instruction de contrôle porte les informations d'authentification d'identité de l'utilisateur ; et
contrôler le dispositif utilisateur selon l'instruction de contrôle après passage pour les informations d'authentification d'identité d'une authentification dans le serveur (S204) ; et
dans lequel le processeur est en outre configuré pour :
déterminer si le premier jeton est mis en cache avant d'envoyer le message de demande (S301) ;
obtenir l'autorité de contrôle locale de l'utilisateur sur le dispositif utilisateur en fonction du premier jeton mis en cache, si le premier jeton est mis en cache (S302) ; et
envoyer le message de demande pour demander le premier jeton du dispositif utilisateur au serveur, si le premier jeton n'est pas mis en cache (S303).

8. Dispositif terminal selon la revendication 7, dans lequel, si le premier jeton est un jeton réinitialisé par le dispositif utilisateur, le premier jeton est généré par un algorithme de hachage en fonction d'un jeton initial du dispositif utilisateur, une chaîne aléatoire et une adresse de contrôle d'accès au support du dispositif utilisateur, où le jeton initial est attribué de manière aléatoire lorsque la dispositif utilisateur quitte une usine.

9. Produit de programme dans lequel sont stockées des instructions qui, lorsqu'elles sont exécutées par un ou plusieurs processeurs d'un appareil, amènent l'appareil à mettre en œuvre le procédé selon l'une quelconque des revendications 1 à 3.
